# EUROPEAN PATENT APPLICATION

(11) **EP 1 646 044 A2**
(43) Date of publication of application: **12.04.2006**
(21) Application number: 05108438.2
(22) Date of filing: 14.09.2005
(51) Int. Cl.: G11B 20/18, G11B 20/12, G11B 27/36

(54) **Write-once medium recording method, recording apparatus, and playback apparatus**

(30) Priority: 05.10.2004 JP 2004292869
(71) Applicant: KABUSHIKI KAISHA TOSHIBA, Tokyo 105-8001 (JP)
(72) Inventor: Fujishiro, Yukiyoshi Toshiba Corporation,, Minato-ku, Tokyo 105-8001 (JP)
(74) Representative: Henkel, Feiler & Hänzel

(57) **Abstract**

A DVD-R disc which is unusable due to a mechanical error in use can be reused. Recording zones 0 to 2 are sequentially formed from the lead-in side to the lead-out side on the DVD-R disc. When an ECC error occurs due to mechanical damage generated during recording picture information 3 in zone 2 in a DVD-VR format, the readable normal latest log information (e.g., log information 2) of log information 2 in zone 1 and log information 1 in zone 0 is moved to the end of zone 2 in which the damage is repaired. After that, recording can be executed in zone 3 next to zone 2.

## Description

The present invention relates to a recording method for a WORM recording medium (e.g., a write-once medium such as a DVD-R disc) and, more particularly, to a method and apparatus for reusing a write-once medium which is unusable because of a mechanical error generated during recording.

As a video recording format of a digital versatile disc (DVD), a DVD video format used in DVD software in cell (or package) sales, or a DVD-VR format used in a DVD recorder to perform an editing process is available. Conventionally, the DVD-VR format is mainly used on a DVD-RAM disc or a DVD-RW disc. These discs are rewritable media to advantageously perform the editing process. However, the unit cost of these media is relatively high.

In contrast to this, the cost of the DVD-R is relatively low. Conventionally, by making a point of playback compatibility with a DVD player, information has been mainly recorded on the DVD-R in the DVD video format. However, a recording process on the DVD-R in the DVD-VR format is also officially approved as the DVD forum standard.

Note that on a high-density recording disc such as the DVD, an error which cannot be completely corrected by ECC can occur because of a mechanical defect (an a priori defect generated when manufacturing the disc, or a posteriori defect such as a large flaw or a fingerprint) on the disc. The rewritable medium such as the DVD-RAM can cope with this defect by an exchange process (Jpn. Pat. Appln. KOKAI Publication No. 9-259538).

However, on a write-once medium such as a DVD-R disc, once a mechanical error (error caused by a large mechanical defect which cannot be completely corrected by ECC) occurs during video recording, the disc cannot be used any more (even when a normal unused recording area remains).

It is an object of the present invention to cause a write-once medium such as a DVD-R to record picture information in a video recording format such as a DVD-VR format. It is another object of the present invention to reuse a write-once medium which is unusable because of a mechanical defect or the like.

According to an aspect of the present invention, a write-once medium having a recording area which can include a plurality of recording zones between a lead-in side and a lead-out side is used. When executing digital video recording (DVD-VR video recording on a DVD-R) on this medium, a first recording zone (zone 0) and a second recording zone (zone 1) are sequentially formed from the lead-in side to the lead-out side. In this case, first picture information and first log information are recorded in the first recording zone (zone 0), and second picture information and second log information are recorded in the second recording zone (zone 1).

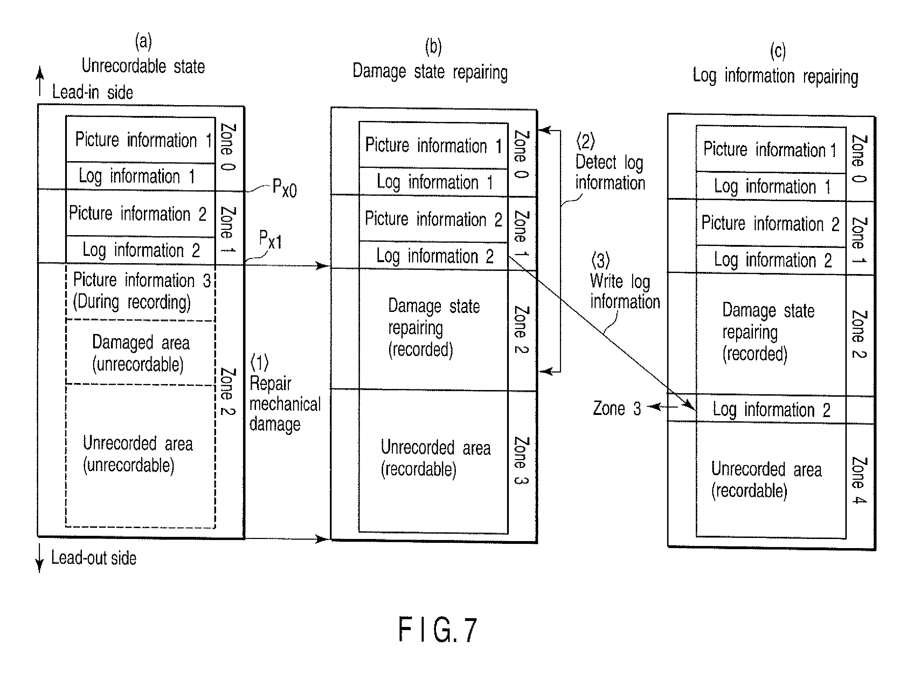

Also, if an ECC error occurs when third picture information (picture information 3 shown in FIG. 7(a)) is recorded in a third recording zone (zone 2) subsequent to the second recording zone (zone 1), readable normal latest log information (e.g., log information 2) of the first log information and the second log information is moved to the end of the third recording zone (zone 2).

A write-once medium such as a DVD-R can record picture information in a video recording format such as a DVD-VR format by using a plurality of recording zones.

Also, the write-once medium which is unusable because of the mechanical error generated during recording (or playback) can also be reused.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram for explaining the outline of a video recording apparatus according to an embodiment of the present invention;
FIG. 2 is a view for explaining the relationship between management information and real picture data according to the embodiment of the present invention;
FIG. 3 is a schematic view for explaining the arrangement of a directory and file defined in a DVD video recording standard (DVD-VR standard);
FIG. 4 is a flowchart for explaining an example of a video recording process in the video recording apparatus according to the embodiment of the present invention;
FIG. 5 is a view for explaining an example of the shift of a recording area when the video recording process is performed on a DVD-R disc in the DVD-VR format;
FIG. 6 is a table showing an example of log information (VAT ICB with VAT) recorded at the end of a zone in the recording area shown in FIG. 5;
FIG. 7 is a view for explaining the outline of the process of, when mechanical damage occurs on the DVD-R disc during video recording in the DVD-VR format, reusing the disc which is unusable because of the damage;
FIG. 8 is a flowchart for explaining an example of a processing sequence (process on a disc drive side) for repairing the mechanical damage on the unavailable disc; and
FIG. 9 is a flowchart for explaining an example of a processing sequence (process on a MPU 30 side shown in FIG. 1) for generating a new video recordable zone on the DVD-R disc after repairing the mechanical damage.

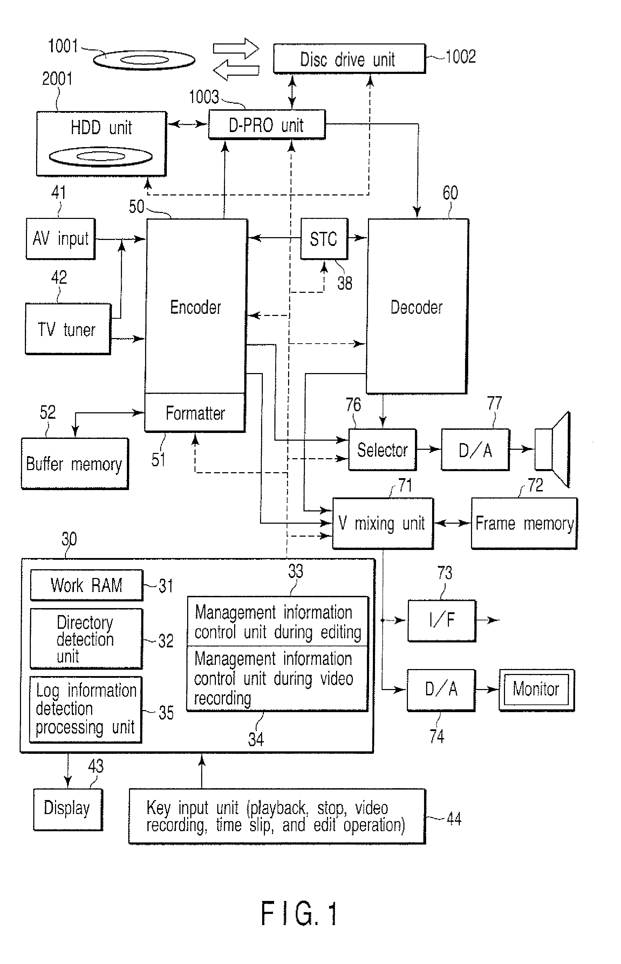

An embodiment of the present invention will be described below with reference to accompanying drawing. FIG. 1 is a block diagram showing an aspect of a video recording apparatus to which the present invention is applied. In this embodiment, an apparatus (a DVD-VR recorder with an HDD) which can handle both an optical disc such as a DVD-R and a hard disc is exemplified as a recording apparatus. However, a semiconductor memory or the like may also be used as the recording medium, as needed.

In FIG. 1, the apparatus is roughly constructed by recording system blocks on the left side, and playback system blocks on the right side. The video recording apparatus shown in FIG. 1 has two different types of disc drive units. First, the video recording apparatus includes disc drive unit 1002 which reads/writes information by rotatably driving optical disc (DVD-RAM, DVD-RW, or DVD-R) 1001 serving as the first medium which is an information recording medium on which a video file is formed. The video recording apparatus also includes hard disc drive unit (HDD) 2001 which drives the hard disc serving as the second medium. Data processor 1003 can supply recording data to disc drive unit 1002 and hard disc drive unit 2001, and receive a playback signal from these units. This disc drive unit 1002 includes a rotation control system, laser driving system, and optical system for optical disc 1001. Data processor 1003 handles data for each recording process or playback process, and includes a buffer circuit, modulation/demodulation circuit, error correction unit, and the like.

The video recording apparatus shown in FIG. 1 mainly comprises encoder 50 which is included on the video recording system side, decoder 60 which is included on the playback system side, and microcomputer block 30 which controls the operation of the apparatus main body. Encoder 50 has a video/audio analog-to-digital converter which converts an input analog video/audio signal into a digital video/audio signal, a video encoder, and an audio encoder. This encoder 50 also has a sub-picture encoder.

The format of an output from encoder 50 is converted into a predetermined DVD-RAM format by formatter 51 with buffer memory 52. The converted format is supplied to above-described data processor 1003. Encoder 50 receives an external analog video signal and external analog audio signal from AV input unit 41, or an analog video signal and analog audio signal from TV tuner 42.

Note that when directly receiving a compressed digital video signal and digital audio signal, encoder 50 can directly supply the compressed digital video signal and digital audio signal to formatter 51. This encoder 50 can also directly supply the digital video signal and digital audio signal which are converted into the analog video signal and analog audio signal to video mixing unit 71 and audio selector 76.

The video encoder in encoder 50 converts the digital video signal into a digital video signal compressed at variable bit rate on the basis of MPEG2 or MPEG1 standard. The digital audio signal is converted into a digital audio signal or linear PCM digital audio signal compressed at fixed bit rate according to the MPEG or AC-3 standard.

When the sub-picture signal is output from AV input unit 41 (for example, when a sub-picture signal is output from a DVD video player with an independent output terminal), or when a DVD video signal in such a data structure is broadcast and received by TV tuner 42, the sub-picture signal in the DVD video signal is encoded (compressed by runlength encoding) by the sub-picture encoder. The encoded sub-picture signal becomes a sub-picture bitmap. The encoded digital video signal, digital audio signal, and sub-picture data are converted into packs, i.e., a video pack, audio pack, and sub-picture pack by formatter 51. These packs are then collected and converted into packs in a format (DVD video format) defined by the DVD video standard, or a format (DVD-VR format) defined by the DVD-recording standard.

The apparatus shown in FIG. 1 supplies information (e.g., video pack, audio pack, and sub-picture pack) formatted by formatter 51, and generated management information to hard disc drive unit 2001 or data disc drive unit 1002 via data processor 1003. The supplied information can be recorded on the hard disc or optical disc 1001. The information recorded on the hard disc or optical disc 1001 can also be recorded on optical disc 1001 or the hard disc via data processor 1003 and disc drive unit 1002. Furthermore, video objects in a plurality of programs recorded on the hard disc or optical disc 1001 can be edited such that a part of the video objects is deleted, and the video objects in different programs are linked. These operations can be performed since the DVD-VR format used in the embodiment of the present invention defines an available data unit to easily perform the editing process.

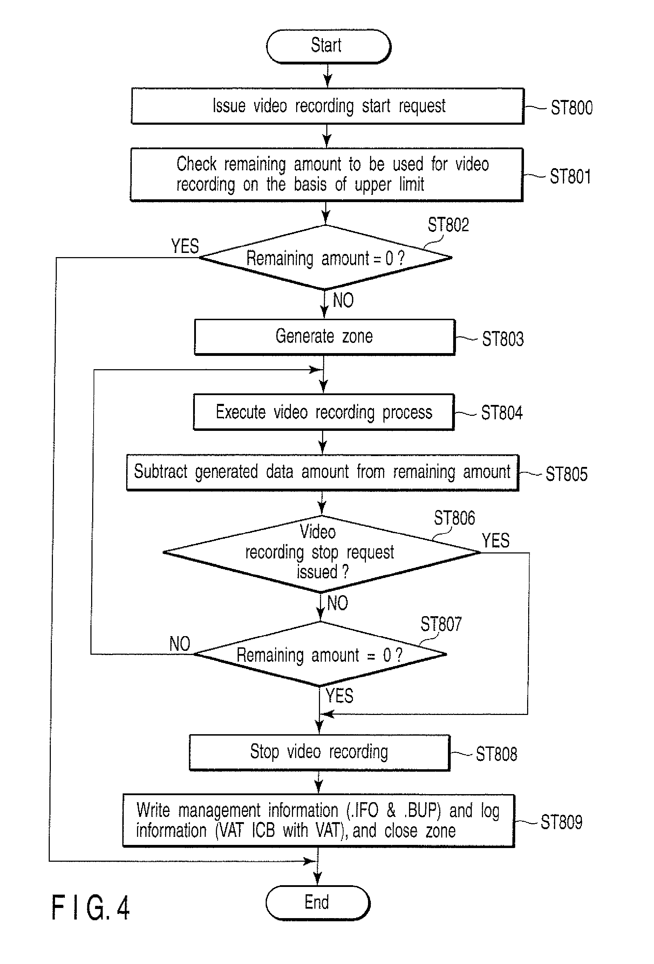

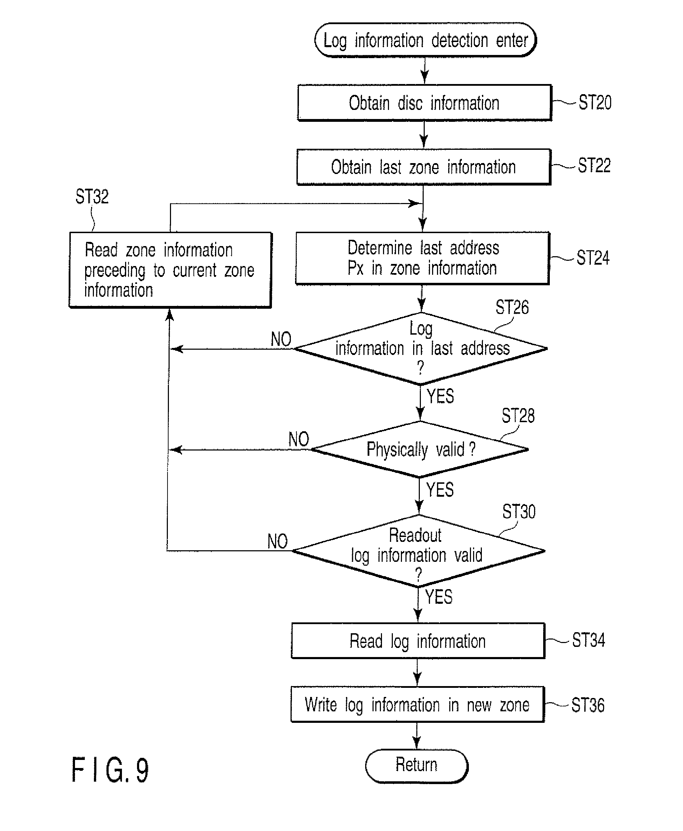

Microcomputer block 30 includes a micro-processing unit (MPU) or central processing unit (CPU), a ROM written with control programs and the like (e.g., firmware for controlling the apparatus as shown in FIGS. 4, 8, and 9), and a RAM which provides a work area required for executing the programs. The MPU of microcomputer block 30 executes, in accordance with the control program stored in the ROM, by using its RAM as a work area, defect location detection process, unrecorded area detection process, video recorded information recording position setting process, UDF recording process, AV address setting process, log information detection process, and the like. Microcomputer block 30 which has an information processing unit required for controlling the entire system includes work RAM 31, directory detection unit 32, VMG (entire video management information) information generation unit, copy-related information detection unit, copy & scrambling information processing unit (RDI processing unit), packet header processing unit, sequence header processing unit, and aspect ratio information processing unit. Microcomputer block 30 also has processing unit 35 for the log information detection process (the process shown in FIG. 9), management information control unit 34 used during video recording, and management information control unit 33 used during editing.

Of the execution results of MPU 30, the contents that a user should know are displayed on display 43 in the picture data recording/playback apparatus, or displayed on a monitor display by (on-screen display) (OSD). Microcomputer block 30 has key input unit 44 which supplies an operation signal for operating this apparatus. This key input unit 44 corresponds to, e.g., operation switches arranged on the main body of the video recording apparatus, or the keys of a remote-controller device. Note that input unit 44 may be a personal computer connected to the video recording apparatus according to the embodiment of the present invention, via a wired communication, wireless communication, optical communication, infrared communication, or the like. In each arrangement, when the user operates this key input unit 44, for example, the input picture/audio signal can be recorded, the recorded contents can be played back, or the video recorded contents can be edited.

Note that microcomputer block 30 controls disc drive unit 1002, hard disc drive unit 2001, data processor 1003, encoder 50, and/or decoder 60 at timings based on the timing data from a system time clock (STC) 38. The video recording/playback operations are generally executed in synchronism with time clocks from STC 38, but other processes may be executed at timings independent of STC 38.

Decoder 60 comprises a separator for separating and extracting the respective packs from DVD format signals with the pack structure, a memory used in executing pack separation and other signal processes, a V decoder for decoding main picture data (the contents of video packs) separated by the separator, an SP decoder for decoding sub-picture data (the contents of sub-picture packs) separated by the separator, an A decoder for decoding audio data (the contents of audio packs) separated by the separator. This decoder 60 also comprises a video processor for appropriately mixing decoded sub-picture data with the decoded main picture to superpose sub-picture data such as menus, highlight buttons, superimposed dialogs, and the like on the main picture, and outputting them.

The output video signal from decoder 60 is input to video mixing unit 71. This video mixing unit 71 mixes the text data, and is connected to a line which directly captures the signals from TV tuner 42 and AV input unit 41. Video mixing unit 71 is also connected to frame memory 72 serving as a buffer. When an output from video mixing unit 71 is an analog output, the information is externally output via interface 73. If the output from video mixing unit 71 is a digital output, the information is externally output via digital-to-analog converter 74.

Note that the apparatus in FIG. 1 may comprise an IEEE 1394 interface (not shown). The apparatus can be connected to an external digital TV tuner via this IEEE 1394 interface to implement digital high-definition TV video recording on the DVD-R disc in a format similar to the DVD-VR format, without converting the digital broadcast into an analog broadcast (However, the digital broadcast is re-encoded.).

The output audio signal from decoder 60 is converted to the analog output audio signal by digital-to-analog converter 77 via selector 76, and then externally output. Audio selector 76 is controlled in accordance with the select signal from microcomputer block 30. Accordingly, when directly monitoring the digital signals from TV tuner 42 and AV input unit 41, this selector 76 can also directly select the signal which has passed through encoder 50.

Note that, formatter 51 in encoder 50 generates segmentation information during video recording, and periodically sends it to the MPU of microcomputer block 30 (information in GOP head interrupt or the like). The segmentation information includes the number of packs of VOBUs, the end address of 1-picture data from the head of the VOBU, the playback time of the VOBU, and the like. At the same time, information from the aspect information processing unit is sent to the MPU at video recording start time. The MPU then generates VOB stream information (STI). Note that the STI stores resolution data, aspect data, and the like to initialize each decoder on the basis of the information.

In the apparatus shown in FIG. 1, one video file is recorded for each disc. In order to continue playback without being interrupted while accessing (seeking) data, a minimum continuous playback information unit (size) is defined. This unit is called a contiguous data area (CDA). The CDA size is an integral multiple of error correction code (ECC) block (16 sectors). In a file system, recording is executed for each CDA unit.

Data processor 1003 receives each VOBU data from the formatter of encoder 50, and then supplies each CDA data to disc drive unit 1002 or hard disc drive unit 2001. The MPU of microcomputer block 30 generates management information required for playing back the recorded data, and recognizes the command representing the end of data recording. After that, the generated management information is sent to data processor 1003. With this operation, the management information is recorded on the disc. Therefore, during encoding, the MPU of microcomputer block 30 receives data unit information (e.g., segmentation information) from encoder 50. At the recording start time, the MPU of microcomputer block 30 also recognizes the management information (file system) read from the optical disc and hard disc, recognizes the unrecorded area on each of the discs, and sets the data recording area on the disc via data processor 1003.

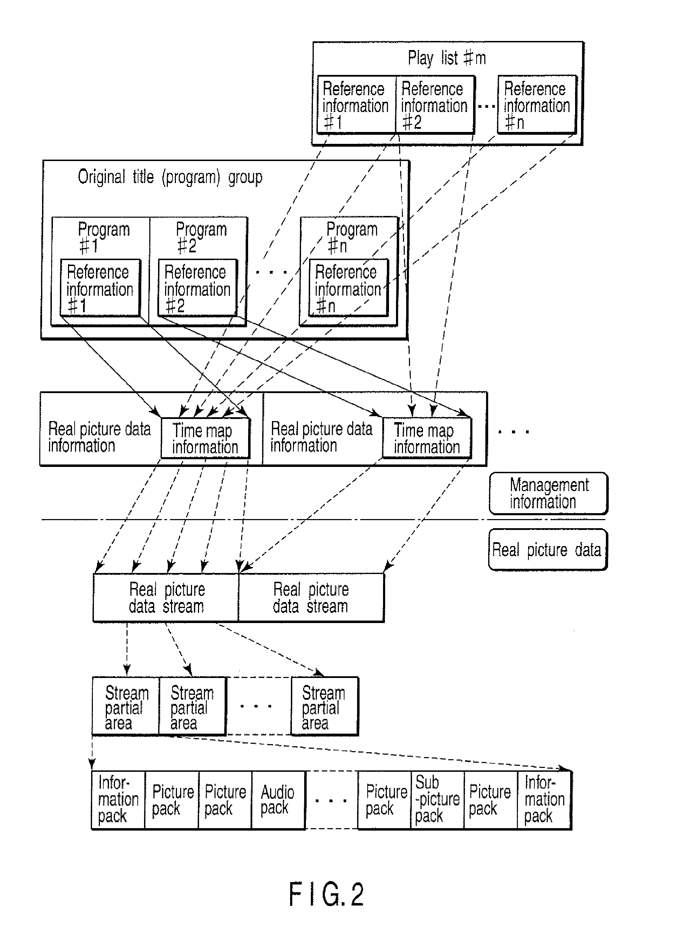

Next, referring to FIG. 2, the relationship between the management information and real picture data serving as the contents will be briefly described. First, the real picture data will be described. Assume that the real picture data are compiled into one file on the recording medium. One file includes one or more real picture data streams. Each real picture data stream can be a recording unit for each video recording process. This video recording unit corresponds to, e.g., a video object (VOB) in the DVD-VR standard. One real picture data stream includes one or more stream partial areas. This stream partial area corresponds to, e.g., a video object unit (VOBU) in the DVD-VR standard, or a group of pictures (GOP) in MPEG2 standard. One stream partial area includes a plurality of packs. As the plurality of packs, an information pack, picture pack, and audio pack are available. A sub-picture pack may also be available.

The information pack corresponds to, e.g., an RDI pack in the DVD video recording (DVD-VR) standard. In this case, this pack includes information indicating the playback start time of the first field of a VOBU to which this pack belongs, information indicating the recording time of a VOSU, manufacturer information (MNFI), and the like. The information pack can also include display control information (DCI) and copy control information (CCI). The display control information indicates aspect ratio information, sub-title mode information, film camera mode information, and the like. The copy control information includes copy enable information or copy inhibition (disable) information.

The picture pack which is obtained by compressing the video data by MPEG2 (or MPEG4/H264) standard includes a pack header, packet header, and video data. The audio pack which is obtained by processing the audio data by, e.g., linear PCM, MPEG, or AC-3 standard includes a pack header, packet header, and audio data.

Next, the management information will be described. In the management information, original title (program) information serving as information (playback order information) for managing the playback order of the real picture data is defined. This information corresponds to, e.g., the program in the DVD-VR standard. In each of the pieces of original title information (or program information), reference information is defined and linked to the real picture data information serving as the information pertaining to the real picture data to be played back. The pieces of information correspond to a cell, video object information (VOBI), and the like in the DVD-VR standard. As described above, the original title (program) has the information (playback order information) for managing the playback order, and its own real picture data. During video recording, this title is generally generated.

In contrast to this, in some cases, an original title (program) includes only information (playback order information) for managing the playback order. This is play list information which corresponds to a play list in, e.g., the DVD-VR standard. This play list information does not have its own real picture data. As shown in FIG. 2, the play list information is generated as a play list by editing (deleting and adding) the reference information linked to the real picture data information of the original title.

Time map information is described in the real picture data information. This time map information designates a partial area included in the real picture data stream corresponding to the real picture data information. A logical address specifies the link from the original title information of management information or the reference information of play list information to the real picture data information. Also, the link from the time map information to the real picture data stream and its partial area is implemented on the basis of a real picture data stream number, the number of partial areas in this stream, an entry number for each of the partial areas, and the logical address to each of the partial areas. In this arrangement, this apparatus can cope with not only normal playback of the video recorded picture data, but also special playback such as fast-forward/slow playback and fast-reverse playback, and a scene searching process.

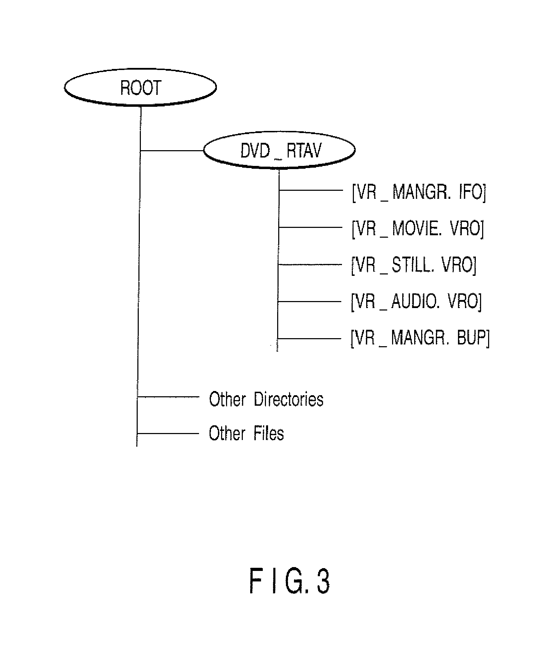

An operation according to the embodiment of the present invention will be described below from FIG. 3. In the following description, the video recording apparatus according to the embodiment of the present invention has the following arrangement. That is, this video recording apparatus is a DVD video recording apparatus based on the DVD video recording standard (DVD-VR standard and/or a new standard HD_DVD which is extended in correspondence with the high-definition TV broadcast based on this DVD-VR standard). In this case, a video recording process is executed on the DVD disc (The DVD-RAM disc or DVD-RW disc are generally used. However, the DVD-R disc can also be used to record the video data.) in a data format called the DVD-VR format. In addition to this, this video recording apparatus also has a function of recording video data on the DVD disc in the DVD video standard. In this case, the video recording process is performed on the DVD disc (e.g., DVD-R disc) in a data format called the DVD video format.

In the video recording apparatus according to the embodiment of the present invention, not only the rewritable DVD-RAM disc and DVD-RW disc but also the DVD-R disc serving as a write-once medium can be used. The format for performing the video recording process on each of these DVD discs is not uniquely fixed to each type of the DVD disc. For example, the video recording process can be performed on the DVD-R in any one of the DVD-VR format, HD_DVD format, and the DVD video format.

In the following description, assume that the video recording apparatus according to the embodiment of the present invention serves as a hybrid video recording device which has two types of video recording media, i.e., the DVD and HDD, as shown in a block diagram in FIG. 1. In this case, the picture information can be dubbed (or moved) between the DVD and the HDD. Note that the contents of the embodiment of the present invention can be applied not only to the hybrid video recording device, but also to a video recording device for only the DVD (this video recording device includes a personal computer having a function of a DVD recorder by using software).

In addition to this, in the video recording apparatus according to the embodiment of the present invention, the partial area in the video recorded title is called a chapter. For example, when video recording is executed in the DVD-VR format, an entry point (EP) defined in the DVD-VR standard in the title is used as the mark of a boundary between the chapters. That is, a zone sandwiched between a given EP and the next EP in the title is called the chapter. Note that the start point and end point of the title serve as chapters irrespective of the presence/absence of the EPs. Hence, in some cases, an EP may not be present at the start point of the first chapter of a title.

FIG. 3 is a schematic view showing the arrangement of directories and files defined in the DVD video recording standard (DVD-VR standard). FIG. 3 exemplifies the directories and files defined by Ver 1.1 in the DVD-VR standard. In Ver 1.1 in the DVD-VR standard, sub-directory DVD_RTAV is provided under the root directory. The files defined in the standard are stored under this sub-directory DVD_RTAV. That is, under DVD_RTAV, only five types of files shown in FIG. 3 are present. Each of the files will be described below.

First, VR_MANGR.IFO is navigation data for the original title (program) and play list. This navigation data corresponds to the management information shown in FIG. 2 as described above. The play list, entry point (EP), and the like are described in this VR_MANGR.IFO. Even if the picture data is not directly processed, the edit process such as an undesired scene deleting process can be performed by changing the description in this VR_MANGR.IFO. Therefore, when the edit processes such as chapter generation and play list editing are to be performed, this VR_MANGR.IFO serves as a processing target. In addition to this, in this VR_MANGR.IFO, time map information for the real picture data is written in synchronism with video recording. Since the information pertaining to the entire disc is also written in this VR_MANGR.IFO, this VR_MANGR.IFO is immediately generated after initializing the DVD disc.

VR_MANGR.BUP is a backup file of the above-described VR_MANGR.IFO. Since this VR MANGR.BUP is an option in the standard, it is not always present. However, when using this VR_MANGR.BUP, the contents of this file must be the same as VR_MANGR.IFO.

Alternatively, VR_MOVIE.VRO is an AV (Audio Visual) data file of a recorded moving image, and corresponds to the real picture data shown in FIG. 2 as described above. In this VR_MOVIE.VRO, the packed picture data and audio data are multiplexed and stored, and the sub-picture data is also multiplexed and stored if supported. A VR_STILL.VRO file is the AV data file of a still image. As in VR_MOVIE.VRO, this VR_STILL.VRO file corresponds to the real picture data shown in FIG. 2 as described above. In this VR_STILL.VRO file, the packed picture data is stored, and the audio data and sub-picture data are multiplexed as an option, in some cases. Additionally, a VR_AUDIO.VRO file is a data file which stores postrecording audio information for the still image in the above-described VR_STILL.VRO file.

These VR_MOVIE.VRO, VR_STILL.VRO, and VR_AUDIO.VRO files are not present when the DVD disc is initialized. These files are generated when the video recording process is actually executed, to record the picture data and audio data. Note that these three different files need not always be present. For example, in some cases, in a video recording apparatus without any still image recording function or postrecording function, VR_STILL.VRO and VR_AUDIO.VRO files are not present.

The file defined by Ver 1.1 in the DVD-VR standard has been described above. In addition to this, in order to increase the operability and add functions in the video recording apparatus, an information file unique to the video recording apparatus can be generated. In this case, these unique information files must not be stored under DVD RTAV. These unique information files must be stored immediately under the root directory, or under a unique sub-directory generated under the root directory.

FIG. 4 is a flowchart for explaining the outline of the video recording process in the video recording apparatus according to the embodiment of the present invention. First, a video recording start request is called (step S800). This corresponds to the start of manual video recording by user's direct operation, or the start of reservation video recording by timer setting. Next, the remaining amount of the recording area which can be used for video recording is checked (step S801). In subsequent step S802, before the video recording process is actually started, it is determined whether the remaining amount for video recording is present. The flow branches depending on the determination result. If it is determined that the video recordable remaining amount is substantially 0 (The remaining amount need not be strictly limited to 0. The remaining amount can be practically treated as 0 when the remaining amount completely becomes 0 after a few minutes from the start of video recording) (YES in step S802), a series of processes end without the subsequent video recording processes. Alternatively, when the video recordable remaining amount is not 0 (NO in step S802), the zone (to be described later) is generated in the recording area (in step S803: skip this process when a new recorded zone has been present). The flow advances to step S804 to start video recording.

Note that in the processes from step S804 to step S807, mainly, the video is recorded, and the remaining amount is checked. In these processes, the remaining amount is sequentially checked while video recording. Since the video recording process and the remaining amount checking process are switched every very short time, these processes are assumed to be concurrently performed in broad perspective.

That is, in step S804, the video recording process is performed. In next step S805, the amount of data generated by video recording is subtracted from the remaining amount of the recording area. Note that the generated data amount by video recording is also subtracted from the second size which is concurrently stored. Next, in step S806, it is monitored whether a video recording stop request is called. For example, this video recording stop request includes a manual video recording stop request by user's direct operation, a reservation video recording stop request by timer setting, and a reservation video recording interruption request by user's operation. When it is determined that the video recording stop request is called, the flow skips step S807, and advances to step S808. When it is determined that the video recording stop request is not called, the flow advances to step S807.

In step S807, the remaining amount obtained by subtracting the code amount generated by video recording in step S805 is checked. After that, it is determined whether the remaining amount for continuing the video recording process, to branch the flow. If it is determined that the remaining amount is 0, the flow advances to next step S808. Alternatively, if it is determined that the remaining amount is not 0, the flow returns to step S804. The processes in steps S804 to S807 are repeated to continue the video recording process. In step S808, assuming that the remaining amount is 0, or that a video recording stop request is called, the video recording process stops, and then a series of processes end.

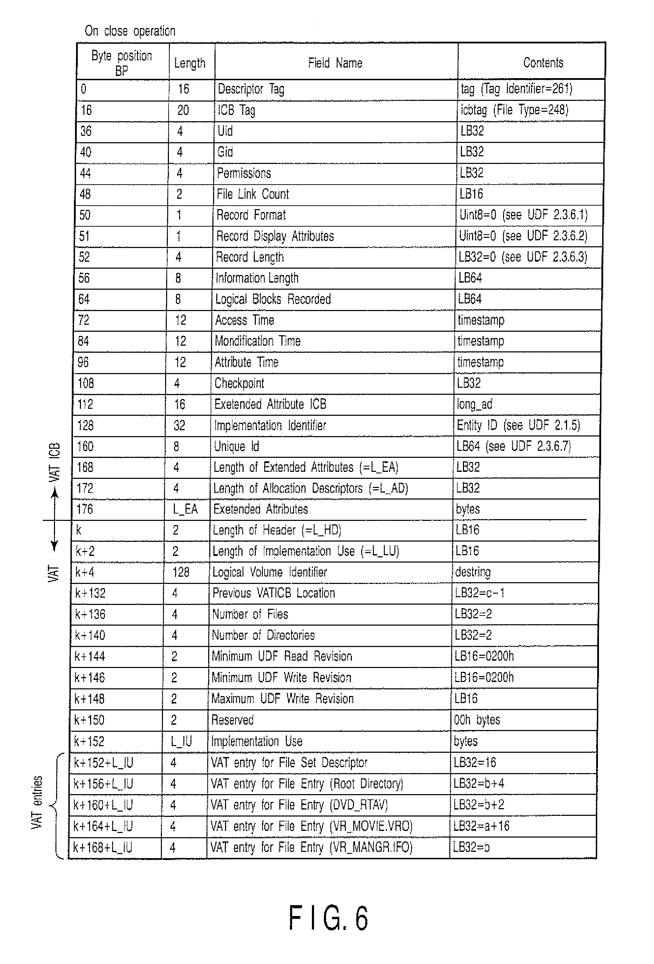

With this operation, a series of video recording processes in the zone end. After the video recording process, in step S809, the management information corresponding to the video recording contents (the VR_MANGR.IFO file and its backup file .BUP in FIG. 3) is generated, and log information ("VAT ICB with VAT" to be described with reference to FIG. 6) is written at the end of the zone. The zone is closed (When the zone is closed, next new video recording is executed for the next zone).

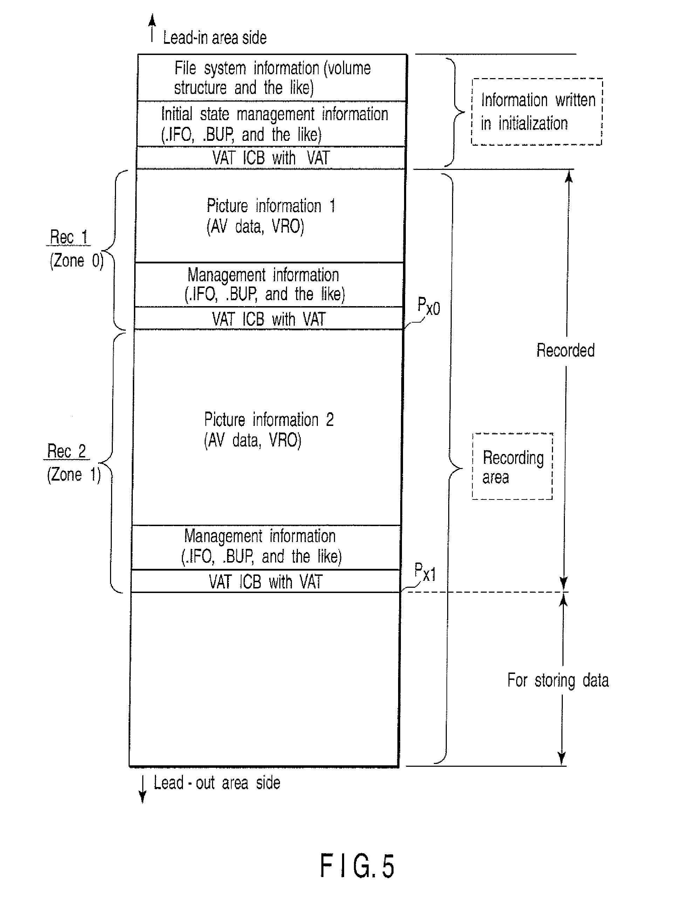

For example, according to an example (DVD-VR format recording on the DVD-R disc) shown in FIG. 5, when the sequence of video recording process is performed for "Rec 1" in zone 0, picture information 1 (VRO file information of AV data) is recorded from the lead-in side of zone 0. After that, the management information (VR_MANGR.IFO and its .BUP) is recorded at its end, and the log information (VAT ICB with VAT) is recorded at the end of this zone 0. The end position (Px0) of zone 0 is indicated by the address generated in correspondence with the recording information length of "Rec 1" from the start of zone 0. This address (the end position Px0 of zone 0) can be written in the log information (VAT ICB with VAT) recorded at the end of zone 0 (see "Information Length" of byte position BP = 56 shown in FIG. 6).

Similarly, when the sequence of video recording processes in steps S804 to S807 shown in FIG. 4 is executed for "Rec 2" of zone 1 shown in FIG. 5, picture information 2 (VRO file information of AV data) is subsequently recorded immediately after the end position Px0 of zone 0. The management information (VR_MANGR. IFO and its .BUP) is then recorded at its end, and the log information (VAT ICB with VAT) is finally recorded at the end of zone 1. The end position (Px1) of zone 1 is indicated by the address generated in correspondence with the recording information length of "Rec 2" from the end position Px0 (= start of zone 1) of zone 0, and this address can be written in the log information (VAT ICB with VAT) recorded at the end of zone 1. That is, the contents of the log information (VAT ICB with VAT) reflect the change of the recorded contents by the video recording process and the like.

Note that when initializing the DVD-R disc having a recording area as shown in FIG. 5, file system information such as a Universal Disc Format (UDF) volume structure, and the initial state management information can be written in the lead-in start area before the start position of zone 0. In this management information, information serving as the management information in the unique information files of the video recording apparatus may be included in addition to the management information defined in the DVD-VR standard such as VR_MANGR.IFO, VR_MANGR.BUP, and the like described with reference to FIG. 3.

If the disc to be used is a rewritable medium such as a DVD-RAM or DVD-RW, when changing the recording contents by the edit process, target data can be updated and rewritten on the disc. Alternatively, on a write-once medium such as a DVD-R, even when a part of a given file is changed upon changing the recording contents on the disc, data must be recorded again in the unrecorded area on the disc. That is, when the edit process is performed, the updated data is not overwritten, but incrementally written. In this case, many pieces of management information such as file management information, parent directory information linked with the file management information, parent directory information of the above parent directory information, and the like must be reconstructed, thus greatly degrading efficiency.

In order to reduce the inefficiency, when data is recorded on the DVD-R by incremental write, a special address conversion table called a virtual allocation table (VAT) is assumed to be used in accordance with the UDF standard. By using this table, when changing the recording contents of the disc, only the changed data and the VAT must be recorded. Hence, an enormous amount of data such as the linked parent directory information need not be changed and incrementally written. In FIG. 5, after recording the management information in the initial state, the VAT at that time and VAT_ICB for identifying the VAT are written as log information (VAT ICB with VAT) at the end of the information area in which the data is written when initializing the information.

As shown in FIG. 5, the remaining amount obtained by subtracting the amount of initially written information is a recording area which can be used for incrementally writing the data in, e.g., a video recording process and editing process. According to the embodiment of the present invention, this recording area can have the first data size allocated for storing data in the edit process and the second data size allocated for video recording. Note that the remaining amount can be recognized by detecting a logical address recognized as an address which is recorded in, e.g., a file system, and used in bitmap information or management information indicating the recorded state of the physical or logical sector.

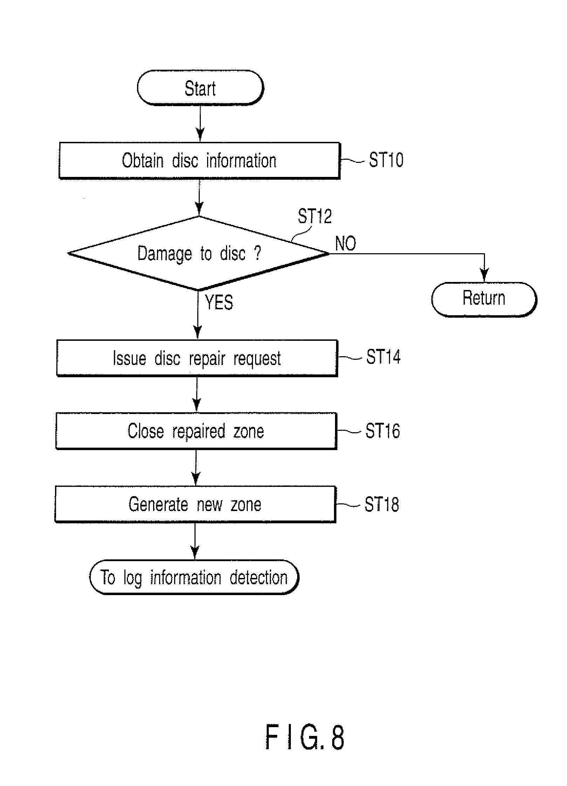

FIG. 6 is a view showing an example of log information (VAT ICB with VAT) recorded at the end of the zone in the recording area shown in FIG. 5. This log information can be generated when closing the zone to be described with reference to FIG. 8 (step ST16), and includes the following pieces of information in the order of the number of byte positions BP.

That is, a descriptor tag is stored at the head byte position = 0. This tag includes two types of tags: one is a volume structure descriptor tag defined by the UDF; and the other is a file structure descriptor tag defined by the UDF. In the DVD-R file structure, VAT and virtual allocation table information control block (VAT_ICB) are recorded in an incremental recording mode. The following contents are allocated to a virtual address in the incremental recording mode. That is, the virtual address = 0 is used for the file set descriptor, and the virtual address = 1 is used for the ICB root directory. Then, the virtual addresses = 2 to 255 are allocated for the file entries of a file recorded in the DVD_RTAV directory or under the DVD_RTAV directory. Since the log information (VAT ICB with VAT) including these contents is provided at the end of each of the zones, the recorded contents of each of the zones can be managed.

In FIG. 6, "Information Length" is stored at the byte position BP = 56. This data indicates the file size for each byte, and corresponds to the sum of information lengths of the allocation descriptors for the file main body. Note that the allocation descriptor is the information indicating the position, length, and the like of an extent (group of pieces of recorded information indicated by the logical sector or logical block).

At the end of the log information (VAT ICB with VAT) shown in FIG. 6, various file entries (root directory VAT entry, DVD_RTAV VAT entry, VR MOVIE.VRO VAT entry, VR_MANGR.IFO VAT entry, and the like) are designed to be described.

FIG. 7 is a view for explaining the outline of the process for, when a mechanical damage is generated on the DVD-R disc during video recording in the DVD-VR format, reusing the disc which is unusable by damage. FIG. 8 is a flowchart for explaining an example of a processing sequence (process on the disc drive side) for repairing mechanical damage on an unusable disc. FIG. 9 is a flowchart for explaining an example of a processing sequence (process on MPU 30 shown in FIG. 1) for generating a video recordable new zone on the DVD-R disc on which the mechanical damage is completely repaired.

After loading the disc (DVD-R) to disc drive unit 1002 shown in FIG. 1, the information on the loaded disc is obtained (step ST10), and it is determined whether the disc is damaged (step ST12). The presence/absence of the damage can be determined by checking whether the ECC correction failure is present in information read out from the disc. If it is determined that the disc has no damage (NO in step ST12), the flow shifts to a control routine of the subsequent processes (video recording process, editing process, playback process, and the like).

If it is determined that the disc is damaged (YES in step ST12), a disc repair request is issued (step ST14). In response to this disc repair request, the disc is repaired by causing the firmware of disc drive unit 1002 to fill a sector (sector of correction failure ECC block) portion in which the damage is found, by using predetermined data. (The sector portion will not be used thereafter.) Sequentially, the repaired zone (e.g., zone 2) is closed (as a kind of mapping out) (step ST16) to generate a new zone (e.g., zone 3) (step ST18). After that, the flow advances to a log information detection process shown in FIG. 9.

When the flow advances to the log information detection process shown in FIG. 9, first, disc information including the log information (VAT ICB with VAT shown in FIG. 6) is obtained (step ST20). In this case, the information in the last zone (zone 1 in FIG. 7(a)) is obtained (step ST22), and the obtained last address Px (Px1 in FIG. 7(a)) in the zone is determined (step ST24). If no log information is present at this address (Px1) (NO in step ST26), the information in a zone (zone 0 in this case) immediately preceding the current zone is read (step ST32), and its last address Px (Px0 in FIG. 7(a)) is determined (step ST24).

If this obtained last address (e.g., Px1) in the zone has log information (YES in step ST26), it is checked whether the log information is physically valid (e.g., whether the correction failure ECC error does not occur) (step ST28). If the log information is physically invalid (NO in step ST28), the immediately preceding information is read in step ST32. If the log information is physically valid (YES in step ST28), it is checked whether the read log information is logically valid (e.g., whether the pieces of file name information are respectively present at byte positions BP of VAT ICB with VAT shown in FIG. 6) (step ST30). If the log information is logically invalid (NO in step ST30), the immediately preceding information is read in step ST32. If the log information is logically valid (YES in step ST30), this log information (log information 2 in FIG. 7 (b) and (c)) is read (step ST34), and the read log information is written (copied) in a new zone (e.g., zone 2) (step ST36).

In FIG. 7 (a) to (c), the above-described processing sequence will be summarized as follows. That is, on a DVD-R disc (write-once medium), as shown in FIG. 7(a), assume that a problem such as the ECC correction failure occurs in zone 2 during recording the information (or playing back the information after recording) in zone 2 subsequent to recorded zones 0 and 1. It is determined that mechanical damage (a defect generated during manufacturing the disc, or a large flaw or dirt on the surface of the disc) is present in zone 2 on the disc. When disc drive unit 1002 shown in FIG. 1 detects this damage, the sector (ECC block) having the problem is filled (a DVD-R pigment tissue in the target sector is burned by a laser beam corresponding to 00h and FFh) to repair the damage. After that, new zone 3 is generated in the unrecorded area subsequent to the filled damaged area (recording area which will not be used thereafter: zone 2) as shown in FIG. 7(b). In this case, at the end of zone 2, as shown in FIG. 7(c), the latest log information (log information 2 in this case) which can be normally read of pieces of log information 1 and 2 in preceding zones 0 and 1 is copied.

As described above, on the DVD-R disc which is unusable due to damage, a new video recording process can be performed in zones subsequent to zone 3 (the unusable DVD-R disc can be reused).

### <Effects of Embodiment>

(1) A failure portion on a write-once medium which is unusable due to a mechanical error in use is repaired to avoid the failure portion from being used. After that, video recording can be performed in an unused area, and the write-once medium which is unusable because of the mechanical error can be reused.
(2) When a copy-once digital broadcast program is video-recorded on an HDD, and the video recorded contents are sequentially moved to a DVD disc, it is inhibited to move the video recorded contents to a DVD-R disc in a DVD video format. However, the video recorded contents can be moved to the DVD-R disc in a DVD-VR format (when the recorder to be used has a function corresponding to this moving process). When the contents are to be moved from an HDD in the DVD-VR format, in some cases, 1 + 1/3 discs are required because only one DVD-R disc cannot record all the program contents. In this case, the DVD-R disc (with a recording amount smaller than that of a new disc) which is made usable by the present invention can be used for moving and video recording the contents, as the 1/3 disc.

The present invention is not limited to the above embodiment, and various changes can be made without departing from the spirit and scope of the present invention in the present or future phase on the basis of available techniques at that time. In addition, the embodiments can be appropriately combined as much as possible as needed. In this case, a combined effect can be obtained. Furthermore, the embodiment incorporates inventions of various phases, so various inventions can be extracted by appropriately combining a plurality of disclosed components. For example, even when an invention is extracted by omitting several components from the all components disclosed in the embodiment, the remaining arrangement can be extracted as the invention.

## Claims

1. A recording method for executing digital video recording on a write-once medium having a recording area which can include a plurality of recording zones between a lead-in side and a lead-out side, wherein a first recording zone (zone 0) and a second recording zone (zone 1) are to be sequentially formed from the lead-in side to the lead-out side, said method **characterized by** comprising:
recording (first ST804-ST809) first picture information (.VRO) and first log information (VAT ICB with VAT) in the first recording zone (zone 0); and
recording (next ST804-ST809) second picture information (.VRO) and second log information (VAT ICB with VAT) in the second recording zone (zone 1).

2. A method according to claim 1, **characterized by** further comprising determining a segmentation between the first recording zone (zone 0) and the second recording zone (zone 1) by completion (yes at ST806) of recording for the first recording zone (zone 0).

3. A method according to claim 1, **characterized by** further comprising, if an ECC error occurs (yes at ST12) when third picture information (3) is recorded in a third recording zone (zone 2) next to the second recording zone (zone 1), moving readable normal latest log information of the first log information (VAT ICB with VAT) and the second log information (VAT ICB with VAT) to an end of the third recording zone (zone 2).

4. A method according to claim 1, **characterized by** further comprising, if an ECC error occurs (yes at ST12) when third picture information (3) is recorded in a third recording zone (zone 2) next to the second recording zone (zone 1), preventing an error-occurrence zone from being used (ST14-ST15), and moving readable normal latest log information of the first log information (VAT ICB with VAT) and the second log information (VAT ICB with VAT) to an end of the third recording zone (zone 2).

5. A method according to claim 1, **characterized in that** one of the first log information (VAT ICB with VAT) and the second log information (VAT ICB with VAT) includes information (Information Length at BP=56) corresponding to a last position (Px0 or Px1) in one of the first recording zone (zone 0) and the second recording zone (zone 1).

6. A method according to claim 1, **characterized in that** the write-once medium has a file structure for managing recording contents in the recording area, and one of the first log information (VAT ICB with VAT) and the second log information (VAT ICB with VAT) includes a descriptor tag (BP=0) in the file structure.

7. A recording apparatus for executing digital video recording on a write-once medium having a recording area which can include a plurality of recording zones between a lead-in side and a lead-out side, wherein a first recording zone (zone 0) and a second recording zone (zone 1) are to be sequentially formed from the lead-in side to the lead-out side, said apparatus **characterized by** comprising:
a first recorder (1002, 1003, 30, 50-52) configured to record first picture information (.VRO) and first log information (VAT ICB with VAT) in the first recording zone (zone 0), and
a second recorder (1002, 1003, 30, 50-52) configured to record second picture information (.VRO) and second log information (VAT ICB with VAT) in the second recording zone (zone 1).

8. An apparatus according to claim 7, **characterized by** further comprising a circuit (30) configured to determine a segmentation between the first recording zone (zone 0) and the second recording zone (zone 1) by completion (yes at ST806) of recording for the first recording zone (zone 0).

9. An apparatus according to claim 7, **characterized by** further comprising a circuit (30) configured to move readable normal latest log information (2) of the first log information (VAT ICB with VAT) and the second log information (VAT ICB with VAT) to an end of the third recording zone (zone 2), if an ECC error occurs (yes at ST12) when third picture information (3) is recorded in a third recording zone (zone 2) subsequent to the second recording zone (zone 1).

10. A playback apparatus (1002, 1003, 30, 60-77) configured to play back recorded contents in a recording area from a write-once medium on which recording is executed in a method defined in claim 1.
